# EUROPÄISCHE PATENTSCHRIFT

(11) **EP 2 683 848 B1**
(45) Veröffentlichungstag und Bekanntmachung des Hinweises auf die Patenterteilung: **04.11.2020**
(21) Anmeldenummer: 12707571.1
(22) Anmeldetag: 05.03.2012
(51) Int. Cl.: B32B 15/01, C10M 111/00, C23C 2/06, C21D 9/48, C25D 3/56, C21D 1/673, C21D 7/13, C22C 38/04, C21D 8/02, C23C 2/26, C25D 5/48, C23C 28/00

(54) **VERWENDUNG EINES STAHLFLACHPRODUKTS FÜR DIE UMFORMUNG ZU EINEM BAUTEIL DURCH WARMPRESSFORMEN UND VERFAHREN ZUR HERSTELLUNG EINES WARMPRESSGEFORMTEN BAUTEILS**
USE OF A FLAT STEEL PROUDUCT FOR HOT PRES FORMING INTO A COMPONENT AND METHOD OF HOT PRESS FORMING A COMPONENT
UTILISATION D'UN PRODUIT EN ACIER PLAT À L'AIDE D'UN FORMAGE À CHAUD POUR FORMER UN COMPOSANT ET PROCÉDÉ DE FABRICATION D'UN OBJET FORMÉ À CHAUD

(30) Priorität: 08.03.2011 DE 102011001140
(43) Veröffentlichungstag der Anmeldung: 15.01.2014
(73) Patentinhaber: ThyssenKrupp Steel Europe AG, 47166 Duisburg (DE)
(72) Erfinder: FLECHTNER, Ken-Dominic, 44309 Dortmund (DE); KÖHLER, Thorsten, 44319 Dortmund (DE); KÖYER, Maria, 44143 Dortmund (DE); MEURER, Manfred, 47495 Rheinberg (DE); SCHROOTEN, Axel, 44137 Dortmund (DE)
(74) Vertreter: Cohausz & Florack
(86) Internationale Anmeldenummer: PCT/EP2012/053716
(87) Internationale Veröffentlichungsnummer: WO 2012/119973

(56) Entgegenhaltungen:
- EP-A1- 1 451 383
- EP-A1- 2 014 783
- EP-A1- 2 014 783
- EP-A1- 2 186 925
- EP-A1- 2 186 925
- EP-A1- 2 366 812
- EP-A1- 2 377 968
- EP-A2- 1 694 879
- EP-A2- 1 960 484
- EP-B1- 1 439 240
- EP-B1- 1 439 240
- WO-A1-00/68460
- WO-A1-00/68460
- WO-A1-03/048403
- WO-A1-2010/070942
- WO-A1-2010/070942
- WO-A1-2010/070943
- WO-A1-2010/070943
- WO-A2-2005/059196
- JP-A- 1 011 983
- JP-A- 2 190 483
- JP-A- 4 176 878
- JP-A- 9 111 473
- JP-A- S6 372 887
- JP-A- S6 411 983
- JP-A- 63 072 887
- JP-A- 63 297 576
- JP-A- H02 190 483
- JP-A- H04 176 878
- JP-A- H09 111 473
- JP-A- S63 297 576
- JP-A- 2000 328 220
- JP-A- 2000 328 220
- US-A1- 2004 241 488
- US-A1- 2004 241 488
- US-A1- 2010 269 558

## Beschreibung

Die Erfindung betrifft ein Stahlflachprodukt, das für die Umformung zu einem Bauteil durch Warmpressformen vorgesehen ist und das eine aus Stahl bestehende Grundschicht aufweist, auf die eine vor Korrosion schützende metallische Schutzschicht aufgetragen ist, die durch Zn oder eine Zn-Legierung gebildet ist.

Darüber hinaus betrifft die Erfindung ein Verfahren zum Herstellen eines derartigen Stahlflachproduktes.

Schließlich betrifft die Erfindung ein Verfahren zur Herstellung eines warmpressgeformten Bauteils aus einem Stahlflachprodukt der erfindungsgemäßen Art.

Wenn hier von "Stahlflachprodukten" die Rede ist, so sind damit Stahlbänder, Stahlbleche oder daraus gewonnene Platinen und desgleichen gemeint.

Um die im modernen Karosseriebau geforderte Kombination aus geringem Gewicht, maximaler Festigkeit und Schutzwirkung zu bieten, werden heutzutage in solchen Bereichen der Karosserie, die im Fall eines Crashs besonders hohen Belastungen ausgesetzt sein können, aus hochfesten Stählen warmpressgeformte und gehärtete Bauteile eingesetzt.

Beim Warmpresshärten werden Stahlplatinen, die von kalt- oder warmgewalztem Stahlband abgeteilt sind, auf eine in der Regel oberhalb der Austenitisierungstemperatur des jeweiligen Stahls liegende Verformungstemperatur erwärmt und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Bauteil Härtegefüge ergibt.

Ein typisches Beispiel für einen für das Warmpresshärten geeigneten Stahl ist unter der Bezeichnung "22MnB5" bekannt und im Stahlschlüssel 2004 unter der Werkstoffnummer 1.5528 zu finden.

Den Vorteilen der bekannten für das Warmpresshärten besonders geeigneten MnB-Stähle steht in der Praxis der Nachteil gegenüber, dass manganhaltige Stähle im Allgemeinen anfällig für korrosive Angriffe und nur schwer zu passivieren sind.

Um die Korrosionsbeständigkeit von Mn-haltigen Stählen der in Rede stehenden Art zu verbessern, ist in der EP 1 143 029 B1 vorgeschlagen worden, ein für das Warmpressformen bestimmtes Stahlblech zunächst mit einem Zink-Überzug zu versehen und es dann vor der Warmverformung derart zu erwärmen, dass sich bei der Erwärmung auf dem Stahlflachprodukt durch eine Transformation der Beschichtung auf dem Stahlblech eine intermetallische Verbindung einstellt. Diese Verbindung soll das Stahlblech gegen Korrosion sowie Entkohlung schützen und während der Warmformgebung im Presswerkzeug eine Schmierfunktion übernehmen.

Trotz dieser im Stand der Technik dem metallischen Schutzüberzug zugeordneten Schmierfunktion zeigt sich bei der praktischen Umformung von nach dem bekannten Verfahren hergestellten Platinen, dass in Folge von Reibung, die zwischen dem jeweils umgeformten Flachprodukt und den mit ihm in Kontakt kommenden Flächen des Umformwerkzeugs herrscht, hohe Spannungen zwischen dem metallischen Überzug und dem Stahlwerkstoff des Flachprodukts entstehen. Diese Spannungen können so weit gehen, dass sich Spannungsrisse im Stahlwerkstoff einstellen.

In der US 2010/0269558 A1 ist vorgeschlagen worden, die beim Warmpressformen eines aus Metall bestehenden Werkstücks im Werkzeug auftretende Reibung durch eine auf ein Metallprodukt aufgetragene Deckschicht zu mindern, die schmierende Eigenschaften aufweist. Das Metallprodukt kann dabei aus einem Al-Werkstoff, einem Mg-Werkstoff, einem Ti-Werkstoff oder einem Edelstahl bestehen, auf das die Deckschicht unmittelbar aufgetragen wird. Die Deckschicht soll dabei in Form einer auf Wasser oder einem Alkohol basierenden Beschichtungsflüssigkeit aufgebracht werden, die BN-, Graphit-, WS₂- oder MoS₂-Partikel enthält. Nachdem die Beschichtungsflüssigkeit in einer bestimmten Dicke auf das jeweilige Werkstück aufgetragen worden ist, wird das Werkstück für mindestens einen Tag bei 25 - 60 °C einer Atmosphäre mit einer relativen Feuchtigkeit von 50 - 100 % ausgesetzt, um die Haftung der Beschichtung auf der Oberfläche des Werkstücks zu bewirken. Anschließend erfolgt die für die Warmpressformgebung erforderliche Erwärmung auf die jeweilige Umformtemperatur und die Umformung des so erwärmten Werkstücks im Umformwerkzeug. Auf diese Weise mag zwar eine Verminderung der im Umformwerkzeug zwischen Werkstück und Werkzeug auftretenden Reibung möglich sein. Für die großtechnische Erzeugung eines Flachprodukts, bei der ein unterbrechungsfreier, kontinuierlicher Fertigungsablauf Voraussetzung für die wirtschaftliche Fertigung ist, ist jedoch ein Beschichtungsverfahren, das eine mindestens eintägige Einwirkungsdauer unter einer exakt vorgegebenen Atmosphäre voraussetzt, ungeeignet. Darüber hinaus eignet sich das bekannte Verfahren beispielsweise nicht, um die Umformbarkeit von mit einer Zn-Beschichtung versehenen Stahlflachprodukten zu verbessern.

Neben dem voranstehend erläuterten Stand der Technik ist aus der EP 1 439 240 B1 ein Verfahren zum Warmpressformen eines Stahlflachprodukts bekannt, bei dem die Oberfläche des Stahlmaterials mit einer plattierten Schicht aus Zink oder einer Zinklegierung beschichtet und darauf eine Sperrschicht gebildet wird, die das Verdampfen von Zink verhindert, selbst wenn es auf eine 700 - 1000 °C betragende Temperatur erhitzt wird. Die betreffende Sperrschicht besteht aus ZnO und wird durch eine Oberflächenoxidation, durch Kontakt mit einem Oxidationsmittel, durch Kontakt mit Zn und einem Oxidationsmittel, durch anodische Elektrolyse, durch kathodische Elektrolyse oder durch Beschichten mit einem ZnO-Sol gebildet.

Des Weiteren ist aus der WO 03/048403 A1 ein Verfahren bekannt, bei dem auf ein beispielsweise mit einer Zn-Beschichtung belegtes Stahlflachprodukt eine 20 - 2000 nm dicke Deckschicht aufgebracht wird. Hierzu wird auf die Zn-Beschichtung eine wässrige Lösung aufgebracht, die eine oder mehrere Arten von Oxidnanopartikeln enthält, die aus der Gruppe SiO2, TiO2, ZrO2, Al2O3, CeO2, Sb2O5, Y2O3, ZnO und SnO2 ausgewählt sind und eine Größe aufweisen, die > 1 nm und < 100 nm ist. Der Deckschicht können Schmierstoffe, wie MoS2 oder PTFE zugegeben werden, um das Gleitverhalten der Stahlflachprodukte beim Umformen zu verbessern. Vor dem Hintergrund des voranstehend erläuterten Standes der Technik bestand die Aufgabe der Erfindung darin, ein mit einer Zn-basierten Beschichtung versehenes Stahlflachprodukt zu nennen, dass sich optimal für die Warmpressformgebung eignet.

Darüber hinaus sollte ein Verfahren angegeben werden, das die Herstellung eines Bauteils aus einem solchen Stahlflachprodukt ermöglicht.

Die Erfindung schlägt zur Verwendung für die Warmformgebung ein Stahlflachprodukt vor, das die in Anspruch 1 angegebenen Merkmale aufweist.

Zur Herstellung eines Bauteils aus einem erfindungsgemäßen Stahlflachprodukt sieht die Erfindung die in Anspruch 3 angegebenen Maßnahmen vor.

Vorteilhafte Ausgestaltungen und Varianten der Erfindung sind in den abhängigen Ansprüchen angegeben und werden nachfolgend wie der allgemeine Erfindungsgedanke im Einzelnen erläutert.

Ein erfindungsgemäßes, für die Umformung zu einem Bauteil durch Warmpressformen vorgesehenes Stahlflachprodukt weist eine aus Stahl bestehende Grundschicht auf, auf die eine vor Korrosion schützende metallische Schutzschicht aufgetragen ist, die durch Zn oder eine Zn-Legierung gebildet ist.

Erfindungsgemäß ist das Stahlflachprodukt nun zusätzlich auf mindestens einer seiner freien Oberflächen mit einer separaten Deckschicht belegt, die eine Oxid-, Nitrid-, Sulfid-, Carbid-, Hydrat- oder Phosphat-Verbindung eines unedlen Metalls enthält. Gemäß der Erfindung ist dementsprechend in einem separaten Arbeitsgang und losgelöst von den anderen optional auf dem erfindungsgemäßen Stahlflachprodukt vorhandenen Beschichtungen eine Deckschicht aufgetragen. Diese Deckschicht wirkt nach Art eines Schmierstoffs und verbessert so die Eignung erfindungsgemäßer Stahlflachprodukte zur Umformung zu einem Bauteil durch Warmpressformen.

Unter die unedlen Metalle, aus denen die in einer erfindungsgemäßen vorhandenen Oxid-, Nitrid-, Sulfid-, Carbid- oder Phosphat-Verbindungen gebildet sind, fallen nach dem Verständnis der Erfindung Metalle der Gruppe "Na, K, Mg, Ca, B, Cr, Mn", die an Sauerstoff bereits unter Normalbedingungen mit dem Sauerstoff der Atmosphäre reagieren.

Die aus Stahl bestehende Grundschicht eines erfindungsgemäß beschaffenen Stahlflachprodukts besteht typischerweise aus mit Mn legierten Stählen, wie sie im Stand der Technik bereits in verschiedenen Ausführungen für das Warmpressformen vorgesehen sind. Solche Stähle weisen typischerweise 0,1 - 3 Gew.-% Mn sowie Gehalte an B auf, um das von ihnen geforderte Festigkeitsniveau zu erreichen. Solche Stahlflachprodukte, die aus solchen Stählen hergestellt sind, sind in der Regel hoch korrosionsempfindlich und werden daher üblicherweise mit einer Zn-basierten metallischen Schutzschicht belegt, die sie vor Korrosion schützen soll. Gerade bei Warmpressformgebung von solchen Stahlflachprodukten, bei denen auf eine aus Stahl bestehende Grundschicht des Stahlflachprodukts eine vor Korrosion schützende Zn-oder Zn-Legierungs-Schutzschicht aufgetragen ist, auf der die Deckschicht liegt, erweist sich die erfindungsgemäße Deckschicht als besonders wirkungsvoll.

Es konnte nachgewiesen werden, dass sich beim Warmpressformen von Stahlflachprodukten, die mit einer metallischen Zn- oder Zn-Legierungs-Schutzschicht und in erfindungsgemäßer Weise mit einer darauf liegenden Deckschicht versehen sind, ca. 80 % weniger Risse gebildet haben, als bei Vergleichsprodukten, die zwar mit derselben Schutzschicht versehen waren, jedoch ohne erfindungsgemäße Deckschicht warmpressgeformt worden sind.

Unter die in einer erfindungsgemäß vorgesehenen Deckschicht vorhandenen Verbindungen fallen demnach beispielsweise Verbindungen wie Mg₃Si₄O₁₀ (OH) 2, MgO, CaCo₃, K₂Co₃, Na₂Ca₃, BN, Al₂O₃ (kubisch), SiO₂, SnS, SnS₂, Mn₂O₃.

Eine erfindungsgemäße Deckschicht führt zu einer entscheidenden Verminderung der Reibung während der Umformung eines erfindungsgemäßen Stahlflachprodukts im jeweiligen formgebenden Werkzeug. Dies gilt insbesondere dann, wenn die in der Deckschicht erfindungsgemäß vorgesehenen Metall-Verbindungen partikelförmig aufgetragen sind, wobei dies die Möglichkeit einschließt, dass die Partikel gemeinsam eine dichte, kompakte Deckschicht bilden. Dabei ergeben sich bei der Verformung eines erfindungsgemäßen Stahlflachprodukts dadurch optimierte Ergebnisse, dass der mittlere Durchmesser der Partikel der Verbindung 0,1 - 3 *µ*m beträgt.

Der besondere Vorteil der erfindungsgemäß vorgegebenen Zusammensetzung der Deckschicht besteht in dieser Hinsicht darin, dass sie auch bei den hohen Temperaturen, bei denen die Warmformgebung eines erfindungsgemäß beschichteten Stahlflachprodukts stattfindet, sicher ihre Wirkung entfaltet. Ohne dass es dazu besonderer Maßnahmen bedarf, haftet die erfindungsgemäß aufgebrachte Deckschicht so fest auf dem jeweiligen Stahlsubstrat, dass sich sowohl in dem für die Erwärmung der Platinen eingesetzten Ofen als auch im Umformwerkzeug nur minimierter Abrieb und geringfügige Anhaftungen ergeben.

Letzteres erweist sich insbesondere auch dann als vorteilhaft, wenn ein erfindungsgemäß beschichtetes Stahlflachprodukt in einem Durchlaufofen auf die Umformtemperatur erwärmt wird und dabei auf rotierenden Ofenrollen voran bewegt wird. Die erfindungsgemäß zusammengesetzte Deckschicht eines erfindungsgemäßen Stahlflachprodukts bleibt hier allenfalls in geringen Mengen an den Ofenrollen haften, so dass der Verschleiß der Rollen und der für ihre Wartung erforderliche Aufwand minimiert sind.

Praktische Untersuchungen haben in diesem Zusammenhang ergeben, dass die erfindungsgemäß zusammengesetzte Deckschicht auch nach einer direkten Temperaturbeanspruchung im für eine Warmpressformgebung typischen Temperaturbereich von 700 bis 950°C über eine ausreichend lange Zeit alle von ihr geforderten Eigenschaften beibehält, insbesondere auch bei den hohen Temperaturen so lange stabil bleibt, bis die Umformung des jeweiligen erfindungsgemäß beschichteten Stahlflachprodukts abgeschlossen ist.

Dabei beeinflusst die erfindungsgemäße Deckschicht die gewünschte Oxidschichtbildung des metallischen Zn-basierten Schutzüberzugs während der Aufheizphase für die Warmformgebung nicht nachteilig. Auch ergeben sich durch die Anwesenheit der erfindungsgemäßen Deckschicht keine Nachteile bei der Weiterverarbeitung. Insbesondere behindert die erfindungsgemäße Deckschicht die Eignung zum Verschweißen, zum Verkleben, zum Lackieren oder für den Auftrag anderer Beschichtungen nicht. Dementsprechend besteht auch keine Notwendigkeit, die erfindungsgemäße Deckschicht zwischen dem Warmpressformen und den anschließend an dem jeweils erhaltenen Bauteil vorgenommenen Arbeitsschritten zu entfernen.

Die erfindungsgemäß aufgetragene Deckschicht überbrückt die erheblichen Grundrauhigkeiten, die sich im Zuge der Erwärmung für das anschließende Warmpressformen an der jeweiligen Oberfläche des Stahlflachprodukts bilden. Praktische Versuche haben in dieser Hinsicht ergeben, dass die erfindungsgemäß aufgebrachte Deckschicht möglichst dünn, das heißt nur 0,1 - 5 *µ*m dick sein soll.

Insbesondere sollte das Belegungsgewicht, mit der die erfindungsgemäße Deckschicht auf der Schutzschicht des Stahlflachprodukts aufgetragen ist, am fertigen Produkt bis zu 15 g/m², insbesondere bis zu 5 g/m², betragen. Einerseits ist bei einer derartigen Belegung der reibungsmindernde Effekt der Deckschicht im Umformwerkzeug vollständig nutzbar. Andererseits sind bei einer dünnen erfindungsgemäßen Deckschicht negative Einflüsse auf die Ergebnisse der bei der Weiterverarbeitung eines erfindungsgemäßen Stahlflachprodukts durchgeführten Arbeitsschritte besonders sicher ausgeschlossen.

Aufgrund der hohen Präzision, mit der Zn- oder Zn-Legierungs-Schichten gerade auf Mn-haltige Stahlsubstrate aufgebracht werden können, ergeben sich insbesondere bei der Umformung erfindungsgemäß beschichteter, mit einer elektrolytisch aufgebrachten Zn-Legierungsschicht, wie einem ZnNi-Legierungsüberzug, versehenen Stahlflachprodukte, deren Stahl 0,3 - 3 Gew.-% Mn enthält, optimale Arbeitsergebnisse. So weisen gerade derartige Stahlflachprodukte bei der Warmpressumformung minimierte Rissanfälligkeiten auf, wenn sie in erfindungsgemäßer Weise mit einer reibungsminimierenden Deckschicht versehen sind.

Mit der Erfindung steht somit ein Stahlflachprodukt zur Verfügung, bei dem die Gefahr der Entstehung von Spannungsrissen auf ein Minimum reduziert ist.

Aus fertigungstechnischer Sicht besteht der entscheidende Vorteil einer erfindungsgemäßen Deckschicht darin, dass sich ihr Auftrag auf die metallische Schutzbeschichtung der aus Stahl bestehenden Grundschicht eines Stahlflachprodukts problemlos in einen kontinuierlich ablaufenden Produktionsprozess einbinden lässt.

Zum Herstellen eines erfindungsgemäß verwendeten Stahlflachproduktes werden mindestens folgende Arbeitsschritte durchlaufen:
- Bereitstellen eines Stahlflachproduktes, das eine aus Stahl bestehende Grundschicht umfasst, die an mindestens einer ihrer Oberflächen mit einer aus Zn- oder einer Zn-Legierung gebildeten metallischen Schutzschicht beschichtet ist,
- Aufbringen einer Deckschicht auf das Stahlflachprodukt durch Auftragen einer Beschichtungsflüssigkeit auf die metallische Schutzschicht des Stahlflachprodukts, wobei die Beschichtungsflüssigkeit zu (in Gew.-%) 5 - 50 % aus einer Oxid-, Nitrid-, Sulfid-, Carbid-, Hydrat- oder Phosphat-Verbindung eines unedlen Metalls der Gruppe "Na, K, Mg, Ca, B, Cr, Mn" sowie zu 1 - 20 % aus einem Binder und als Rest aus einem Lösemittel besteht,
- Einstellen der Dicke der Deckschicht und
- Trocknen der Deckschicht.

Die für die Beschichtung eines erfindungsgemäß verwendeten Stahlflachprodukts vorgesehenen Arbeitsschritte können beispielsweise in einer Feuerbeschichtungs- oder elektrolytischen Beschichtungsanlage im Anschluss an die zum Auftrag der metallischen, Zn-basierten Schutzschicht erforderlichen Prozessschritte in einer Beschichtungseinrichtung vorgenommen werden, die in Linie zu den für den Auftrag der metallischen Zn-basierten Schutzschicht erforderlichen Arbeitsstationen steht und in die das aus der letzten dieser Arbeitsstationen austretende Stahlflachprodukt in einem kontinuierlichen, unterbrechungsfreien Bewegungsablauf eintritt. Selbstverständlich kann die Deckschicht auch in einer separaten, kontinuierlich arbeitenden Anlage aufgebracht werden.

Abhängig von der Menge an weiteren Bestandteilen der auf die metallische Zn-basierte Schutzschicht des Stahlflachprodukts aufgetragenen Beschichtungsflüssigkeit ergibt sich bei erfindungsgemäßer Vorgehensweise eine Deckschicht, die zu 20 - 98 Gew.-% aus der Oxid-, Nitrid-, Sulfid-, Carbid-, Hydrat- oder Phosphat-Verbindung des jeweiligen unedlen Metalls und als Rest aus den jeweils anderen Komponenten besteht.

Während die in einer erfindungsgemäß aufgebrachten Beschichtungsflüssigkeit enthaltenen Verbindungen des jeweiligen unedlen Metalls den wesentlichen Beitrag zur Minimierung der während des Warmpressformens im Werkzeug vorhandenen Reibung leisten, stellt der in der Beschichtungsflüssigkeit zusätzlich vorhandene Binder die ausreichend feste Anbindung der durch die Beschichtungsflüssigkeit gebildeten Deckschicht an die aus Zn- oder einer Zn-Legierung bestehenden metallische Schutzschicht des Stahlflachprodukts sicher.

Bei dem betreffenden Binder kann es sich beispielsweise um einen organischen oder einen anorganischen Binder handeln, wie zum Beispiel um Wasserglas oder Cellulose. Der jeweilige Binder fixiert die erfindungsgemäß aufgetragene Beschichtung auf der Zn-basierten Schutzschicht und verhindert, dass die erfindungsgemäß aufgetragene Beschichtung sich vor der Blechumformung ablöst.

Wird ein natürlicher oder künstlich erzeugter organischer Binder verwendet, so sollte dieser bevorzugt wasserlöslich und gut dispergierbar sein, um als Lösemittel der Beschichtungsflüssigkeit problemlos Wasser verwenden zu können. Beispiele für in Frage kommende organische Binder sind: Celluloseester, Cellulosenitrat, Celluloseacetobutyrat, Styrolakrylacetat, Polyvinylacetat, Polyacrylat, Siliconharz und Polyesterharz. Der organische Binder sollte dabei auch so ausgewählt werden, dass er im Zuge des Auftrags oder Trocknens der Beschichtungsflüssigkeit oder bei der für die Warmumformung vorgenommenen Erwärmung weitestgehend rückstandsfrei verbrennt. Dies hat den Vorteil, dass durch den Binder die Schweißbarkeit sicher nicht beeinträchtigt wird. Auch sollte der organische Binder keine Halogene wie Fluor, Chlor oder Brom enthalten, die beim Verbrennungsvorgang (Warmumformung) zur Abgabe gesundheitsschädlicher, explosiver oder ätzender Verbindungen führen.

Besonders gute Beschichtungsergebnisse ergeben sich auch, wenn ein anorganischer Binder verwendet wird. Diese anorganischen Binder verbleiben nach der Erwärmung und dem Presshärtevorgang auf dem Stahlflachprodukt, so dass sie regelmäßig auch in der Deckschicht des fertigen Produkts feststellbar sind. Typische Beispiele für anorganische Binder der in Rede stehenden Art sind Silizane, Kaliumsilikat (K₂O-SiO₂), Natriumsilikat (Na₂O-SiO₂), (H₂SiO₃) oder SiO₂.

Als flüssiger Träger, d. h. Lösemittel, in dem die anderen Bestandteile der erfindungsgemäß aufgetragenen Beschichtungsflüssigkeit enthalten sind, dient bevorzugt Wasser, das während der Trocknung der Deckschicht problemlos verdunstet und als Wasserdampf ohne größeren Aufwand abgezogen und umweltschonend entsorgt werden kann. Der Lösemittelgehalt einer erfindungsgemäß aufgetragenen Beschichtungsflüssigkeit beträgt dabei typischerweise 15 - 80 Gew.-%., insbesondere regelmäßig mehr als 50 Gew.-%. Alternativ zu Wasser können als Lösemittel auch Öle und Alkohole verwendet werden, sofern diese schnell verdunsten und keine Gefahr für Personen und Anlagentechnik im Applizierungsbereich darstellen.

Neben ihren Hauptbestandteilen "Oxid-, Nitrid-, Sulfid-, Carbid-, Hydrat- oder Phosphat-Verbindung eines unedlen Metalls" und "Binder" kann die erfindungsgemäß auf der metallischen Zn-basierten Schutzschicht applizierte Beschichtungsflüssigkeit dabei Bestandteile enthalten, die beispielsweise ihre Benetzungseigenschaften oder die Verteilung der in ihr erfindungsgemäß enthaltenen Verbindung verbessern.

Praktische Untersuchungen haben dabei gezeigt, dass sich optimale Beschichtungsergebnisse einstellen, wenn die Beschichtungsflüssigkeit 5 - 35 Gew.-% der Oxid-, Nitrid-, Sulfid-, Carbid-, Hydrat- oder Phosphat-Verbindungs-Komponente enthält. Bei derart bemessenen Gehalten an der betreffenden Verbindungs-Komponente der Beschichtungsflüssigkeit ergeben sich Deckschichten, die bis zu 94 Gew.-% aus der Oxid-, Nitrid-, Sulfid-, Carbid-, Hydrat- oder Phosphat-Verbindung eines unedlen Metalls bestehen.

Im Hinblick auf eine Minimierung der Prozesszeiten und des Beschichtungsergebnisses wirkt es sich positiv aus, wenn die Temperatur der Beschichtungsflüssigkeit beim Auftragen 20 - 90 °C, insbesondere 60 - 90 °C, beträgt. Demselben Zweck dient es, wenn die Temperatur des Stahlflachprodukts beim Auftragen der Beschichtungsflüssigkeit 5 - 150 °C, insbesondere 40 - 120 °C, beträgt. Dabei kann die für den Arbeitsschritt "Auftragen der Deckschicht" gewünschte Temperatur des Stahlflachprodukts bei geeignet enger Abfolge der Arbeitsschritte aus dem vorangehenden Arbeitsschritt "Auftragen der metallischen Schutzschicht" mitgenommen werden. Einer zusätzlichen Erwärmungseinrichtung bedarf es in diesem Fall nicht.

Alternativ ist es ebenso möglich, die erfindungsgemäße Deckschicht im Zuge eines vorbereitenden Arbeitsschritts vor dem Warmpressformen zu erzeugen. Hierbei kann die für die Warmpressformgebung erforderliche Erwärmung dazu genutzt werden, die Deckschicht zu trocknen. So kann es zweckmäßig sein, das Stahlflachprodukt nach der Beschichtung mit der Zn-Schutzschicht zunächst zum Weiterverarbeiter zu transportieren und dort die Deckschicht kurz vor dem Eintritt des Stahlflachprodukts in den Warmumformofen aufzutragen, in dem das Stahlflachprodukt auf die für die Warmformgebung erforderliche Temperatur erwärmt wird.

Die Beschichtungsflüssigkeit kann durch Tauchen, Spritzen oder andere konventionelle Auftragsverfahren aufgebracht werden.

Die Einstellung der Schichtdicke auf die jeweils im Bereich von 0,1 - 5 *µ*m liegende Schichtdicke kann ebenfalls in konventioneller Weise durch Abquetschrollen, Abblasen überschüssiger Flüssigkeitsmengen, Variation des Feststoffanteils der Beschichtungsflüssigkeit oder Veränderung der Temperatur der Beschichtungsflüssigkeit erfolgen.

Die Trocknung der erfindungsgemäß applizierten Deckschicht erfolgt typischerweise bei 100 - 300 °C, wobei die typische Trocknungszeit im Bereich von 5 - 180 sec liegt. Sowohl die Trocknungstemperatur als auch die Trocknungszeiten sind dabei so bemessen, dass der Trocknungsvorgang problemlos in konventionellen Trocknungseinrichtungen absolviert werden kann, durch die das jeweilige Stahlflachprodukt im kontinuierlichen Durchlauf geleitet wird.

Das in erfindungsgemäßer Weise beschichtete Stahlband kann anschließend zu Coils gewickelt und zur Weiterverarbeitung transportiert werden. Die weiteren zur Erzeugung eines Bauteils aus dem erfindungsgemäßen Stahlflachprodukt erforderlichen Prozessschritte können örtlich und zeitlich getrennt beim Weiterverarbeiter durchgeführt werden.

Aufgrund der minimierten Reibung, die sich bei der Umformung beim Kontakt der in erfindungsgemäßer Weise mit einer Deckschicht versehenen Stahlflachprodukte mit dem Umformwerkzeug einstellt, lassen sich aus erfindungsgemäß beschichteten Stahlflachprodukten durch Warmpressformen rissfreie Bauteile fertigen, für deren Formgebung hohe Streckgrade oder komplex gestaltete Verformungen erforderlich sind. Das erfindungsgemäße Verfahren zur Herstellung eines warmpressgeformten Bauteils sieht hierzu vor, dass aus einem mit einer Deckschicht der erfindungsgemäßen Art versehenen Stahlflachprodukt in an sich bekannter Weise beispielsweise durch Laserschneiden oder mit Hilfe einer anderen konventionellen Schneideinrichtung eine Platine geschnitten wird, die dann auf eine oberhalb von 700 °C liegende Umformtemperatur durcherwärmt wird und in einem Umformwerkzeug zu dem Bauteil umgeformt wird. In der Praxis liegen die typischen Umformtemperaturen im Bereich von 700 - 950 °C bei Erwärmungszeiten von 3 - 15 Minuten.

Im Fall der Verarbeitung eines Stahlflachprodukts, dessen Grundschicht aus einem 0,3 - 3 Gew.-% Mn enthaltenden Stahl gefertigt ist, ergeben sich optimale Arbeitsergebnisse beispielsweise dann, wenn die Platinen- bzw. Bauteiltemperatur maximal 920 °C, insbesondere 830 - 905 °C, beträgt. Dies gilt insbesondere dann, wenn das Formen des Stahlbauteils als Warmformgebung im Anschluss an die Erwärmung auf die Platinen- bzw. Bauteiltemperatur so durchgeführt wird, dass die erwärmte Platine ("direktes" Verfahren) bzw. das erwärmte Stahlbauteil ("indirektes" Verfahren) unter Inkaufnahme eines gewissen Temperaturverlustes in das jeweils anschließend genutzte Formwerkzeug gelegt wird. Besonders betriebssicher lässt sich die jeweils abschließende Warmformgebung dann durchführen, wenn die Platinen- bzw. Bauteiltemperatur beim Verlassen des jeweils verwendeten Erwärmungsofens 850 - 880 °C beträgt. Abhängig von den Transportwegen, Transportzeiten und Umgebungsbedingungen ist die Bauteiltemperatur im Werkzeug in der Praxis regelmäßig um 100 - 150 °C niedriger als die Temperatur beim Verlassen des Erwärmungsofens.

Das durch Umformen bei derart hohen Temperaturen erhaltene Bauteil kann in an sich bekannter Weise ausgehend von der jeweiligen Umformtemperatur beschleunigt abgekühlt werden, um in dem Bauteil Härtegefüge zu erzeugen und so eine optimale Belastbarkeit zu erzielen.

Die durch die erfindungsgemäß aufgebrachte Deckschicht verminderte Reibung im Umformwerkzeug macht ein erfindungsgemäßes Stahlflachprodukt dabei aufgrund der Unempfindlichkeit des in erfindungsgemäßer Weise beschichteten Stahlflachproduktes gegen Risse des Stahlsubstrats und Abrieb insbesondere für das einstufige Warmpressformen geeignet, bei dem eine Warmformgebung und die Abkühlung des Stahlbauteils unter Ausnutzung der Wärme der zuvor durchgeführten Erwärmung in einem Zuge in dem jeweiligen Umformwerkzeug durchgeführt werden.

Genauso positiv wirken sich die Eigenschaften eines erfindungsgemäß beschichteten Stahlflachprodukts selbstverständlich beim zweistufig erfolgenden Warmpresshärten aus. Bei dieser Verfahrensvariante wird zunächst die Platine gebildet und dann ohne zwischengeschaltete Wärmebehandlung aus dieser Platine das Stahlbauteil geformt. Das Formen des Stahlbauteils erfolgt dann typischerweise in einem Kaltformvorgang, bei dem eine oder mehrere Kaltumformoperationen durchgeführt werden. Der Grad der Kaltformgebung kann dabei so hoch sein, dass das erhaltene Stahlbauteil im Wesentlichen vollständig fertig ausgeformt ist. Jedoch ist es auch denkbar, die erste Formgebung als Vorformen durchzuführen und das Stahlbauteil nach dem Erwärmen in einem Formwerkzeug fertig zu formen.

Dieses Fertigformen kann mit dem Härtevorgang kombiniert werden, indem das Härten als Formhärten in einem geeigneten Formwerkzeug durchgeführt wird. Dabei wird das Stahlbauteil in ein seine fertige Endform abbildendes Werkzeug gelegt und für die Ausbildung des gewünschten Härte- oder Vergütungsgefüges ausreichend schnell abgekühlt. Das Formhärten ermöglicht so eine besonders gute Formhaltigkeit des Stahlbauteils.

Unabhängig davon, welche der beiden Varianten des erfindungsgemäßen Verfahrens angewendet werden, müssen weder die Formgebung noch die zur Ausbildung des Härte- oder Vergütungsgefüges benötigte Abkühlung in besonderer, vom Stand der Technik abweichender Weise durchgeführt werden. Vielmehr können bekannte Verfahren und vorhandene Vorrichtungen für diesen Zweck eingesetzt werden.

Die erfindungsgemäß erhaltenen Bauteile können nachfolgend konventionellen Füge- und Beschichtungsprozessen unterzogen werden.

Nachfolgend wird die Erfindung anhand von Ausführungsbeispielen näher erläutert.

### Versuch 1

Zur Herstellung eines warmpressgeformten Bauteils aus einem kaltgewalzten und rekristallisierend geglühten, beispielsweise 1,5 mm dicken Stahlband, das aus einem unter der Bezeichnung "22MnB5" bekannten und im Stahlschlüssel 2004 unter der Werkstoffnummer 1.5528 geführten Stahl besteht, ist das Stahlband im Durchlauf einer Reinigungsbehandlung unterzogen worden. Eine solche Reinigungsbehandlung kann ein alkalisches Reinigerbad mit einer Spritzreinigung unter Bürsteneinsatz, eine elektrolytische Entfettung, eine wiederum mit Bürsteneinsatz durchgeführte Klarwasserspülbehandlung und eine Dekapierung mit Chlorwasserstoffsäure sowie eine weiter Wasserspülung umfassen.

Das derart vorbehandelte Stahlband ist in einer elektrolytisch arbeitenden Beschichtungseinrichtung mit einem ZnNi-Legierungsüberzug versehen worden, der eine das Stahlsubstrat gegen Korrosion und andere Angriffe schützende Zn- oder Zn-Legierungs-Schutzschicht bildet. Die hierzu durchgeführten Maßnahmen sind im Einzelnen in der PCT-Anmeldung PCT/EP2010/052326 erläutert, deren Inhalt zur Ergänzung der diesbezüglichen Offenbarung in die vorliegende Anmeldung einbezogen wird.

Das derart elektrolytisch mit einer 10 *µ*m dicken ZnNi-Schutzschicht versehene, 120 °C warme Stahlband ist anschließend in eine Beschichtungsflüssigkeit getaucht worden, die erfindungsgemäß als Carbonat eines unedlen Metalls 20 Gew.-% Kalziumcarbonat, und als Binder 5 Gew.-% einer Silikatverbindung K₂O-SiO₂, Rest Wasser enthielt. Anschließend ist die Dicke der auf diese Weise auf die ZnNi-Schutzschicht des Stahlbands aufgetragenen Deckschicht durch Abquetschen der noch flüssigen Beschichtungsflüssigkeit eingestellt und die Deckschicht in einem Trocknungsofen getrocknet worden. Die nach dem Tauchbeschichten eingestellte Dicke der Deckschicht ist dabei so bemessen worden, dass die Deckschichtdicke am Ende des Trocknungsprozesses 2 *µ*m auf jeder Seite des Stahlbands betrug. Die im Durchlauf durch den Trocknungsofen absolvierte Trocknung erfolgte bei einer Ofentemperatur von 120 °C innerhalb von 5 Sekunden. Die Einstellung der Schichtdicke kann alternativ auch durch Variation des Anteils an der Verbindung des unedlen Metalls, der Badtemperatur oder durch Abblasen erfolgen.

Aus dem so beschichteten Stahlband sind Platinen geschnitten worden, die anschließend auf eine beim Verlassen des Erwärmungsofens beispielsweise 880 °C betragende Warmformgebungstemperatur erwärmt, in einem konventionellen Warmpresshärtwerkzeug einstufig zu jeweils einem Stahlbauteil warmpressgeformt und so schnell abgekühlt worden sind, dass sich im Stahlsubstrat Härtegefüge einstellte. Die so erhaltenen, warmpressgeformten und gehärteten Stahlbauteile waren rissfrei.

### Versuch 2

In einem zweiten Versuch sind aus einem in konventioneller Weise durch Schmelztauchbeschichten und eine anschließende Galvanealed-Behandlung mit einer 10 *µ*m dicken Zn-Fe-Schutzbeschichtung versehenen, aus dem Stahlwerkstoff 22MnB5 bestehenden Stahlband Platinen geschnitten worden.

Die Platinen sind anschließend bei einer Platinentemperatur von 120 °C durch Sprühen mit einer Beschichtungsflüssigkeit belegt worden, die neben Wasser als Umformhilfsmittel erfindungsgemäß 15 Gew.-% eines Hydrats eines unedlen Metalls in Form von monoklinem Talk enthielt und als anorganischen Binder zur Anbindung der Deckschicht an die metallische Schutzbeschichtung weitere 10 % der Silikatverbindung Na₂O-SiO₂ enthielt.

Nach einer Einstellung der Dicke der so aufgetragenen Deckschicht durch Abquetschen ist die Platine in einem Trocknungsofen getrocknet worden. Die Dicke der Schicht ist dabei so eingestellt worden, dass die fertige Deckschicht nach dem Trocknen eine Dicke von 1,5 *µ*m je Seite aufwies. Die Trocknung erfolgte im Durchlauf innerhalb von 8 sec in einer NIR-Trockenstrecke.

Aus den so beschichteten Platinen ließen sich nach einer Erwärmung auf eine beim Verlassen des Erwärmungsofens 890 °C betragende Platinentemperatur durch Warmpressformen mit anschließender Härtung ebenfalls rissfreie Stahlbauteile formen.

### Versuch 3

Ein in einem Galvanealing-Prozess durch Schmelztauchen mit anschließender Wärmebehandlung mit einem 10 *µ*m dicken Zn-Fe Schutzüberzug versehenes, aus dem Stahl 22MnB5 bestehendes Stahlband ist bei einer Temperatur des Stahlbands von 60 °C zeitlich und örtlich in unmittelbarem Anschluss nach dem Schmelztauchprozess am Ausgang der zum Auftrag des Schutzüberzugs verwendeten Galvanealing-Beschichtungsanlage durch Aufsprühen einer Beschichtungsflüssigkeit mit einer Deckschicht versehen worden. Die Beschichtungsflüssigkeit enthielt erfindungsgemäß 15 Gew.-% eines Nitrids eines Halbmetalls in Form von Bornitrid und als anorganischen Binder zur Anbindung der Deckschicht an den Zn-Fe-Schutzüberzug des Stahlbands weitere 5 Gew.-% Silikatverbindungen (Na₂O-SiO₂, K₂O-SiO₂), Rest Wasser.

Die Dicke der auf die Schutzschicht aufgetragenen Deckschicht wurde bei noch nasser Deckschicht derart eingestellt, dass die Dicke der Deckschicht im trockenen Zustand 0,1 - 5 *µ*m betrug und im Mittel bei 1 *µ*m je Seite lag. Die Einstellung der Dicke der Deckschicht erfolgte durch Variation des Sprühdrucks und der Geschwindigkeit des aus der Beschichtungsanlage austretenden Stahlbands.

Die Trocknung der Deckschicht erfolgte innerhalb von 180 sec in einem 120 °C warmen Konvektionstrockner, der in Line zu der Beschichtungsanlage angeordnet war und im kontinuierlichen Durchlauf auf die Beschichtungsanlage folgend durchlaufen worden ist. Der Auftrag des Korrosionsschutzüberzugs und der Deckschicht konnten so in einem unterbrechungsfreien kontinuierlichen Durchlauf besonders wirtschaftlich erfolgen.

Aus dem so beschichteten Stahlband sind Platinen geschnitten worden, die anschließend auf eine beim Verlassen des Erwärmungsofens betragende Platinentemperatur von 890 °C erwärmt und durch Warmpressformen mit anschließender Härtung zu rissfreien Stahlbauteilen verformt worden sind.

### Versuch 4 (nicht erfindungsgemäß)

Elektrolytisch mit einem 10 *µ*m dicken, vor Korrosion schützenden Zn-Ni-Schutzüberzug beschichtete, aus dem Stahl 22MnB5 bestehende Stahlblechplatinen sind zeitlich und örtlich getrennt von der Erzeugung des Schutzüberzugs und unmittelbar vor der für das Warmpressformen erforderlichen Erwärmung des Stahlflachprodukts auf 890 °C durch Aufsprühen einer Beschichtungsflüssigkeit mit einer Deckschicht versehen worden. Die Beschichtungsflüssigkeit enthielt in diesem Fall in erfindungsgemäßer Weise 25 Gew.-% eines Sulfids eines unedlen Metalls in Form von Zinksulfid, als Binder zur Anbindung der Deckschicht an den metallischen Schutzüberzug weitere 2 % Silizane und als Rest ein leicht flüchtiges Mineralöl.

Die Dicke der so aufgebrachten, noch nassen Deckschicht ist anschließend so eingestellt worden, dass sie zwischen 1 - 6 *µ*m betrug und im Mittel bei 3 *µ*m je Seite der Platinen lag. Die Einstellung der Schichtdicke erfolgte dabei durch Variation des Sprühdrucks und der Substratgeschwindigkeit am Einlauf der Erwärmungsstrecke, in der die Platinen auf die für das Warmpressen erforderliche Warmformgebungstemperatur erwärmt worden sind, die beim Verlassen der Erwärmungsstrecke bei 880 °C lag. Die Trocknung der Deckschicht erfolgt dabei in einem ersten Segment der Erwärmungsstrecke, welches separat oder zusammen mit der restlichen Aufheizstrecke ausgeführt sein kann.

Die so beschichteten Stahlplatinen sind anschließend auf eine beim Verlassen des Erwärmungsofens betragende Platinentemperatur von 860 °C erwärmt und durch Warmpressformen mit anschließender Härtung zu rissfreien Stahlbauteilen verformt worden.

### Versuch 5

Eine in einem elektrolytisch mit anschließender Wärmebehandlung mit einer 10 *µ*m dicken Galvanealed-Zn-Fe-Schutzschicht beschichtetes, aus dem Stahlwerkstoff 22MnB5 bestehendes und 1,5 mm dickes Stahlblech ist bei einer Blechtemperatur von 120 °C durch Tauchen in einer Beschichtungsflüssigkeit mit einer Deckschicht versehen worden.

Die Beschichtungsflüssigkeit enthielt dabei neben Wasser erfindungsgemäß 25 Gew.-% eines Carbonats eines Erdalkalimetalls in Form von Kalziumcarbonat (CaC0₃) und zur Anbindung der Deckschicht an den metallischen Schutzüberzug 8 Gew.-% Celluloseester als Binder, der in dem Wasser der Beschichtungsflüssigkeit gelöst war. Der organische Filmbildner sorgte nach Verdunsten des Wassers für eine gute Adhäsion und die Verankerung der Kalziumcarbonatpartikel am zinkbasierten Schutzüberzug und trug zu einer besonders guten Verschweißbarkeit der aus dem Stahlblech warmpressgeformten Bauteile bei.

Die Dicke der auf den Schutzüberzug aufgetragenen Deckschicht ist auch in diesem Fall im nassen Zustand so eingestellt worden, dass die Deckschicht nach der Trocknung zwischen 0,1 - 5 *µ*m und im Mittel 2,5 *µ*m je Seite dick war. Eingestellt worden ist die Schichtdicke der nassen Deckschicht durch Abblasen von überschüssiger Beschichtungsflüssigkeit. Auch hier könnte, wie bei allen anderen der hier beschriebenen Ausführungsbeispiele, alternativ oder ergänzend die Dicke der Deckschicht durch Variation des Feststoffanteils der Beschichtungsflüssigkeit oder der Badtemperatur eingestellt werden. Nach der Einstellung der Schichtdicke ist die Deckschicht innerhalb von 5 sec bei 150 °C in einem Durchlaufofen getrocknet worden.

Das so mit einem Schutzüberzug und einer darauf liegenden erfindungsgemäßen Deckschicht versehene Stahlblech ist anschließend auf eine beim Verlassen des Erwärmungsofens betragende Platinentemperatur von 880 °C erwärmt und durch Warmpressformen mit anschließender Härtung zu rissfreien Stahlbauteilen verformt worden.

### Versuch 6

Aus dem Stahl 22MnB5 bestehende Stahlblechplatinen sind durch Schmelzbadtauchen mit einem 10 *µ*m dicken, vor Korrosion schützenden Zn-Ni-Schutzüberzug beschichtet worden. Anschließend ist auf die mit dem Schutzüberzug versehenen 20 °C warmen Stahlblechplatinen eine Deckschicht durch Aufsprühen einer Beschichtungsflüssigkeit aufgetragen worden, die in erfindungsgemäßer Weise 15 Gew.-% eines Hydrats eines unedlen Metalls in Form von monoklinem Talk enthielt.

Zusätzlich wies die Beschichtungsflüssigkeit zur Anbindung der Deckschicht an den metallischen Schutzüberzug als Binder weitere 10 Gew.-% Vinylazetat auf, welches als Dispersion in Wasser polymerisiert war. Dieser organische Binder sorgte durch Vernetzung für eine gute Verankerung des Magnesium-Silikat-Hydrats am zinkbasierten Überzug. Der Rest der Beschichtungsflüssigkeit bestand aus Wasser.

Die Dicke der Deckschicht wurde durch Abquetschen der noch flüssigen Deckschicht eingestellt. Auf das Abquetschen folgte eine absolvierte Trocknung, die innerhalb von 8 sec bei einer Trocknungstemperatur von 140 °C absolviert worden ist. Die Dicke der auf die Schutzschicht aufgetragenen Deckschicht wurde im nassen Zustand so eingestellt, dass die Deckschicht im getrockneten Zustand zwischen 0,1 - 5 *µ*m dick war und ihre Dicke im Mittel 2 *µ*m je Seite betrug.

Die Stahlblechplatinen sind anschließend auf eine beim Verlassen des Erwärmungsofens betragende Platinentemperatur von 920 °C erwärmt und durch Warmpressformen mit anschließender Härtung zu rissfreien Stahlbauteilen verformt worden.

### Versuch 7: (nicht erfindungsgemäß)

Elektrolytisch mit einem 10 *µ*m dicken, vor Korrosion schützenden Zn-Mg-Schutzüberzug beschichtete, aus dem Stahl 28MnB5 bestehende Stahlplatinen sind zeitlich und örtlich im unmittelbaren Anschluss an die Erzeugung des Zn-Mg-Schutzüberzugs durch Aufsprühen einer Beschichtungsflüssigkeit mit einer Deckschicht versehen worden.

Die Beschichtungsflüssigkeit enthielt in diesem Fall neben Wasser 25 Gew.-% eines Sulfids eines unedlen Metalls in Form von Zinksulfid und als Binder zur Anbindung der Deckschicht an den metallischen Schutzüberzug weitere 7 % Silizane. Die so aufgebrachte Nassschicht ist anschließend in einem NIR-Trockner getrocknet worden. Dabei wurde die Nassschicht so eingestellt, dass sich eine Trockenschicht von 3 *µ*m je Seite ergab. Die Trocknung erfolgte im Durchlauf in einer Zeit von 3 sec.

Aus den so beschichteten Platinen ließen sich nach einer Erwärmung auf eine beim Verlassen des Erwärmungsofens 890 °C betragende Platinentemperatur durch Warmpressformen mit anschließender Härtung ebenfalls rissfrei herstellen.

## Patentansprüche

1. Verwendung eines Stahlflachprodukts für die Umformung zu einem Bauteil durch Warmpressformen, bei dem das Stahlflachprodukt auf eine oberhalb von 700 °C und höchstens 950 °C betragende Umformtemperatur durcherwärmt wird, wobei das Stahlflachprodukt eine aus Stahl bestehende Grundschicht aufweist, auf die eine vor Korrosion schützende metallische Schutzschicht aufgetragen ist, die durch Zn oder eine Zn-Legierung gebildet ist, wobei auf mindestens eine der freien Oberflächen des Stahlflachprodukts eine separate, 0,1 - 5 *µ*m dicke Deckschicht aufgetragen ist, die eine in der Deckschicht partikelförmig vorliegende Oxid-, Nitrid-, Sulfid-, Carbid-, Hydrat- oder Phosphat-Verbindung eines unedlen Metalls enthält, das der Gruppe "Na, K, Mg, Ca, B, Cr, Mn" angehört, wobei der mittlere Durchmesser der Verbindungspartikel der Deckschicht 0,1 - 3 *µ*m beträgt und wobei die Deckschicht zu 20 - 98 Gew.-% aus der Verbindung besteht.

2. Verwendung nach Anspruch 1, **dadurch gekennzeichnet, dass** das Stahlflachprodukt aus einem 0,3 - 3 Gew.-% Mangan enthaltenden Stahlwerkstoff erzeugt ist.

3. Verfahren zur Herstellung eines warmpressgeformten Bauteils,
- bei dem aus einem Stahlflachprodukt, das eine aus Stahl bestehende Grundschicht aufweist, auf die eine vor Korrosion schützende metallische Schutzschicht aufgetragen ist, die durch Zn oder eine Zn-Legierung gebildet ist, wobei auf mindestens eine der freien Oberflächen des Stahlflachprodukts eine separate, 0,1 - 5 *µ*m dicke Deckschicht aufgetragen ist, die eine in der Deckschicht partikelförmig vorliegende Oxid-, Nitrid-, Sulfid-, Carbid-, Hydrat- oder Phosphat-Verbindung eines unedlen Metalls enthält, das der Gruppe "Na, K, Mg, Ca, B, Cr, Mn" angehört, wobei der mittlere Durchmesser der Verbindungspartikel der Deckschicht 0,1 - 3 *µ*m beträgt und wobei die Deckschicht zu 20 - 98 Gew.-% aus der Verbindung besteht, eine Platine geschnitten wird,
- bei dem die Platine auf eine oberhalb von 700 °C und höchstens 950 °C liegende Umformtemperatur über eine Dauer von 3 - 15 Minuten durcherwärmt wird
und
- bei dem die Platine in einem Umformwerkzeug zu dem Bauteil umgeformt wird.

4. Verfahren nach Anspruch 3, **dadurch gekennzeichnet, dass** das umgeformte Bauteil von der Umformtemperatur beschleunigt abgekühlt wird, um in dem Bauteil Härtegefüge zu erzeugen.

## Claims

1. Use of a flat steel product for forming into a component by hot pressing, wherein the flat steel product is heated to a forming temperature which is above 700°C and a maximum of 950°C, wherein the flat steel product has a base layer which comprises steel and to which there is applied a metal protective layer which protects from corrosion and which is formed by means of Zn or a Zn alloy, wherein there is applied to at least one of the free surfaces of the flat steel product a separate 0.1 to 5 µm thick cover layer which contains an oxide, nitride, sulphide, carbide, hydrate or phosphate compound of a base metal which is present in the cover layer in particle form and which belongs to the group "Na, K, Mg, Ca, B, Cr, Mn", wherein the mean diameter of the compound particles of the cover layer is from 0.1 to 3 µm and wherein the cover layer comprises the compound at from 20 to 98% by weight.

2. Use according to claim 1, **characterised in that** the flat steel product is produced from a steel material containing from 0.3 to 3% by weight of manganese.

3. Method for producing a hot-pressed component:
- wherein a plate is cut from a flat steel product which has a base layer which comprises steel and to which there is applied a metal protective layer which protects from corrosion and which .is formed by Zn or a Zn alloy, wherein there is applied to at least one of the free surfaces of the flat steel product a separate 0.1 to 5µm thick cover layer which contains an oxide, nitride, sulphide, carbide, hydrate or phosphate compound of a base metal which is present in the cover layer in particle form and which belongs to the group "Na, K, Mg, Ca, B, Cr, Mn", wherein the mean diameter of the compound particles of the cover layer is from 0.1 to 3 µm and wherein the cover layer comprises the compound at from 20 to 98% by weight,
- wherein the plate is heated to a forming temperature which is above 700°C and a maximum of 950°C for a period of from 3 to 15 minutes,
and
- wherein the plate is formed into the component in a forming tool.

4. Method according to claim 3, **characterised in that** the formed component is cooled in an accelerated manner from the forming temperature in order to produce hardening structures in the component.

## Revendications

1. Utilisation d'un produit d'acier plat qui est destiné à être transformé en un objet par formage à chaud, lors de laquelle le produit d'acier plat est réchauffé à une température de formage étant supérieure à 700 °C et étant au maximum de 950 °C, le produit d'acier plat présentant une couche de base constituée d'acier sur laquelle est appliquée une couche métallique protectrice anticorrosion constituée de Zn ou d'un alliage de Zn, une couche de couverture séparée d'une épaisseur de 0,1 - 5 µm étant appliquée sur l'une des surfaces libres dudit produit d'acier plat, laquelle contient un composé d'un métal commun de type oxyde, nitrure, sulfure, carbure, hydrate ou phosphate, présent sous forme particulaire dans la couche de couverture, appartenant au groupe composé par « Na, K, Mg, Ca, B, Cr, Mn », le diamètre moyen de la particule du composé de la couche de couverture étant de 0,1 - 3 µm et la couche de couverture étant composée à hauteur de 20 - 98 % en poids par le composé.

2. Utilisation selon la revendication 1, **caractérisée en ce que** le produit d'acier plat est produit à partir d'un matériau en acier contenant du manganèse à hauteur de 0,3 - 3 % en poids.

3. Procédé de fabrication d'un objet par formage à chaud,
- dans lequel une plaquette est découpée à partir d'un produit d'acier plat qui présente une couche de base constituée d'acier sur laquelle est appliquée une couche métallique protectrice anticorrosion constituée de Zn ou d'un alliage de Zn, une couche de couverture séparée d'une épaisseur de 0,1 - 5 µm étant appliquée sur l'une des surfaces libres dudit produit d'acier plat, laquelle contient un composé d'un métal commun de type oxyde, nitrure, sulfure, carbure, hydrate ou phosphate, présent sous forme particulaire dans la couche de couverture, appartenant au groupe composé par « Na, K, Mg, Ca, B, Cr, Mn », le diamètre moyen de la particule du composé de la couche de couverture étant de 0,1 - 3 µm et la couche de couverture étant composée à hauteur de 20 - 98 % en poids par le composé,
- dans lequel la plaquette est réchauffée à une température de formage étant supérieure à 700 °C et étant au maximum de 950 °C pendant une durée de 3 - 15 minutes
et
- dans lequel la plaquette est transformée en un objet dans un outil de façonnage.

4. Procédé selon la revendication 3, **caractérisé en ce que** l'objet transformé est refroidi, de manière accélérée, à partir de la température de formage afin de produire dans l'objet le durcissement de structure.
